# EUROPEAN PATENT APPLICATION

(11) **EP 3 708 442 A1**
(43) Date of publication of application: **16.09.2020**
(21) Application number: 19162809.8
(22) Date of filing: 14.03.2019
(51) Int. Cl.: B60R 25/23, B60R 25/25, G07C 9/00, B60S 1/04

(54) **WINDOW KEYPAD SYSTEM**

(71) Applicant: Ningbo Geely Automobile Research & Development Co. Ltd., Hangzhou Bay New District Ningbo 315336 (CN)
(72) Inventor: PIHLSGÅRD, Måns, 411 29 GÖTEBORG (SE); JOHANSSON, Jonathan, 417 14 GÖTEBORG (SE)
(74) Representative: Zacco Sweden AB

(57) **Abstract**

A keyless entry keypad system for a vehicle (1) comprises a vehicle window comprising a keypad area (2). The system further comprises a control unit for interpreting the user input on the keypad area (2). Said window is the windscreen window (3) and the keypad area (2) is arranged within the range of a windscreen wiper (4) and the system further comprises a keypad activation device (5) arranged on the vehicle (1) and arranged to enable a keypad on the keypad area (2) for entering a code.

## Description

### TECHNICAL FIELD

The present invention relates to a keyless entry keypad system for a vehicle, comprising a vehicle window comprising a keypad area. The system further comprises a control unit for interpreting the user input on the keypad area.

### BACKGROUND

There are occasions when it is not practical to bring keys or a phone. These moments could be made easier if there exists a completely keyless system for a vehicle. For example, when heading for the beach, leaving keys or a phone by your towel is risky if everyone goes into the water at the same time. It causes stress for the user knowing the risk or having to keep an eye constantly on their belongings.

Several solutions to the above mentioned issue have been suggested. Some solutions have keypads always visible, for instance placed on the B-pillar. Other solutions have keypads projected onto the window of the door to the driver's seat.

### SUMMARY

It is an object of the present disclosure to provide an alternative keyless system with improved safety.

According to a first aspect of the present disclosure a keyless entry keypad system for a vehicle comprises a vehicle window comprising a keypad area. The system further comprises a control unit for interpreting the user input on the keypad area. Said window is the windscreen window and the keypad area is arranged within the range of a windscreen wiper and the system further comprises a keypad activation device arranged on the vehicle and arranged to enable a keypad on the keypad area for entering an access code.

Having the keypad area within the range of the windscreen wiper increases the security since the windscreen wiper erases or at least blurs out the exact location of any leftovers of finger prints. The keypad activation device could for instance be touch sensor on the door handle that monitors if someone is touching the handle and sends a signal to activate the keypad when someone touches the handle. A further alternative is simply to monitor if someone is pulling the handle on a door, preferably the door closest to the keypad area. In most cases it will be the door to the driver's seat but the others are not to be excluded. The most logical solution is to have the keypad activation device on the driver's door. However, it might increase the theft protection level if the keypad activation device instead is arranged on for instance the rear door on the same side as the driver's door.

The keypad activation device is according to an aspect of the present disclosure an identification scanner. The identification scanner is yet a further step to improve security against non-authorized entry.

According to one aspect of the present disclosure the identification scanner is a fingerprint scanner. For instance, the fingerprint scanner could be arranged on the windscreen.

An alternative for the fingerprint scanner is to adapt it to be arranged on a door handle of the vehicle. A further alternative is to have it out of sight on the underside of the handle. Entering the vehicle would then be initiated by the user touching the underside of the door handle, e.g. with the thumb. When an authorized fingerprint is confirmed the keypad will light up on the keypad area to signal that an authorization code can be entered in order to unlock the vehicle.

According to yet an alternative the identification scanner is a facial recognition device. The device could be activated for instance by touching or pulling the handle of the driver's door and the facial recognition is done through the window of the same door. An alternative is to have a camera in the vehicle compartment directed to scan the face of a person looking in through the window of the driver's door. Still a further option is to activate the keypad area simply by pulling the handle, the handle is pulled when the vehicle is locked and the keypad is lit up on the keypad area ready for input.

According to a further aspect of the present disclosure the keyless entry keypad system further comprises a light emitting device projecting the keypad on the window. The light emitting device could for instance be placed on the top of the dashboard.

The keyless entry keypad system has according to yet a further aspect of the present disclosure a keypad area on the windscreen that comprises a layer of light reactive substance.

According to one example embodiment the light reactive substance is a chemical composition that exhibits light fluorescing functionality when exposed to light in the ultra-violet light spectrum and the light outputted from the light emitting device comprises light from the ultra-violet light spectrum.

The light emitting device is according to one aspect of the present disclosure one of an ultra-violet light emitting diode and a laser that emits ultra-violet light.

According to a further aspect of the present disclosure the light emitting device is adapted to adjust the intensity of outputted light dependent upon at least one of ambient light level and a solar intensity level. If for instance the vehicle is parked outdoors and the it is very bright due to sunlight, obviously the intensity of the outputted light must at least be close to maximum in order for the keypad to be visible.

According to yet a further aspect, the keyless entry keypad system with a projected keypad comprise a control unit that is arranged to scramble the keypad shown on the keypad area. With a traditional keypad there is always the risk that an onlooker easily can see the entry code by observing which places are pressed. A way to further improve security is therefore to scramble the keypad each time it is used. As the digits are scrambled, observing which keys or places are pressed will not reveal the code of PIN to a potential thief. This also ensures that the keypad area is equally "worn" even if the same code is always used.

The keyless entry keypad system further comprises an imaging device for capturing user interaction with the keypad area according to another aspect of the present disclosure. This solution is more cost effective as regards the windscreen which otherwise would have to be equipped with a touch sensitive surface. A combination could also be used to improve the accuracy of the input further.

According to an alternative aspect of the present disclosure the keyless entry keypad system comprises a sensor for detecting user interaction with the keypad area. An option for sensor is an acoustic sensor that could triangulate the vibrations emanating from where the windscreen window is touched. A further option for sensor is a capacitive sensor.

Further features of, and advantages with, the present invention will become apparent when studying the appended claims and the following description. The skilled person realize that different features of the present invention may be combined to create embodiments other than those described in the following, without departing from the scope of the present invention. For instance, the identifications scanner could also be an eye scanner.

### BRIEF DESCRIPTION OF THE DRAWINGS

The above, as well as additional objects, features and advantages of the present invention, will be better understood through the following illustrative and non-limiting detailed description of exemplary embodiments of the present invention, wherein:
Figure 1 is a perspective view of the front part of a vehicle with a keypad area schematically shown on the windscreen,
Figure 2 is a perspective view from the inside of a vehicle showing a keypad area projected onto the windscreen, and
Figure 3 is a side view of a part of the exterior of a vehicle including the front door.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference character refer to like elements throughout the description.

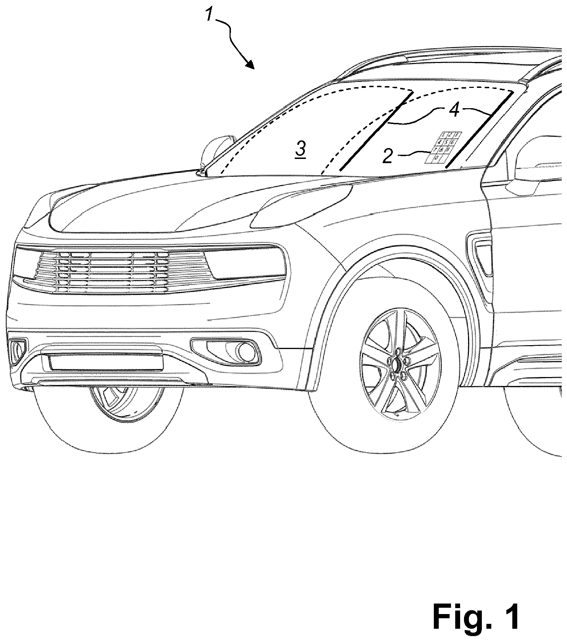

With reference to figure 1, a vehicle 1 has a keyless entry keypad system. The windscreen window 3 comprises a keypad area. For interpreting the user input on the keypad, the system further comprises a control unit.

The keypad area 2 is arranged within the range of a windscreen wiper 4. When a user has entered a code on a keypad, be it traditional buttons or on a touchscreen, it is possible to detect which buttons or areas that have been touched. A presumptive thief has therefore an easier job entering the vehicle since the numbers on the keypad touched is in the code for unlocking the vehicle.

If, for instance, it is a four digit code and there are 10 possible digits, the number of combinations are only 24, instead of 10000, if someone can see afterwards which digits have been chosen. Thus, having the keypad area 2 within the range of the windscreen wiper makes it possible to have the surface "cleaned" after the correct code has been entered and thereby making it more difficult for anyone who wishes to enter unauthorized.

Additionally, there is the option of having windscreen washer fluid on the windscreen when the vehicle leaves. This could be automated such that a control unit monitors the status of the vehicle and when it is put in gear and drives away the windscreen wipers starts running at the same time as windscreen washer fluid is sprayed from the windscreen washer fluid nozzles onto the windscreen. This should be an option in the settings easily reachable for the driver since there are situations when spraying windscreen washer fluid should be avoided.

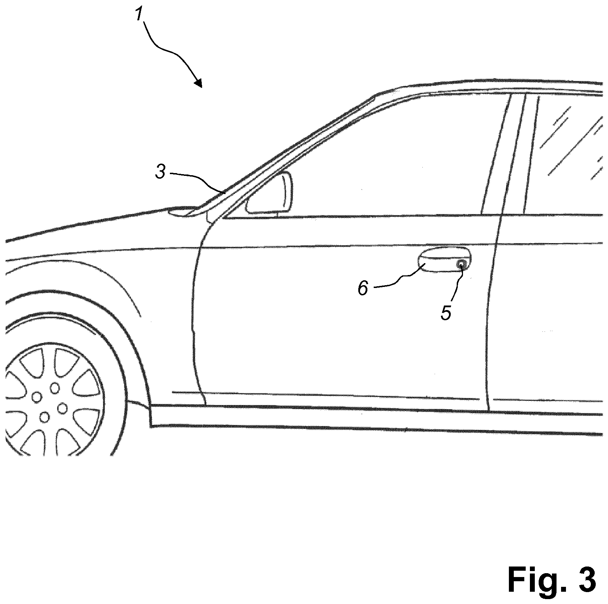

Turning to figure 3, an identification scanner is used as keypad activation device 5 and is arranged to enable the keypad on the keypad area 2 for entering a code. In the shown embodiment the scanner is placed on the door handle 6 and is thus a fingerprint scanner. As an alternative, the scanner is instead placed on the face of the handle facing down. This way the scanner will not be easily visible and might also be more esthetical. Thus, according to the embodiment shown, the first step in order to unlock the door or doors is to have a fingerprint scanned on the door handle 6 using the identification scanner 5. If the fingerprint scanned corresponds to a stored fingerprint in an authorization list, the keypad is lit up on the windscreen 3 on the keypad area 2. The keypad is thereby ready for being pressed.

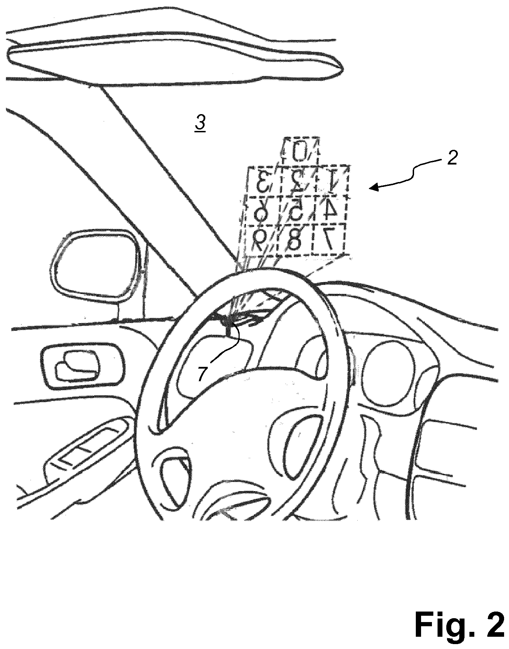

In figure 2, a light emitting device 7 projecting the keypad on the windscreen 3 on the keypad area 2 is shown. In the figure, the light emitting device 7 is placed on the dashboard. However, the light emitting device 7 could be placed anywhere as long as it is possible to project a keypad on the windscreen 3, for instance on the A-pillar.

It is to be understood that the present invention is not limited to the embodiments described above and illustrated in the drawings; rather, the skilled person will recognize that many changes and modifications may be made within the scope of the appended claims. For example, the identification scanner could be arranged on the keypad area. This would have the advantage of not having to have a separate scanner for identification but rather one scanner for both the identification and the keypad.

## Claims

1. A keyless entry keypad system for a vehicle (1), comprising a vehicle window comprising a keypad area (2), the system further comprising a control unit for interpreting the user input on the keypad area (2),
**characterized in**
**that** said window is the windscreen window (3) and the keypad area (2) is arranged within the range of a windscreen wiper (4) and the system further comprises a keypad activation device (5) arranged on the vehicle (1) and arranged to enable a keypad on the keypad area (2) for entering a code.

2. The keyless entry keypad system according to claim 1, wherein the keypad activation device is an identification scanner.

3. The keyless entry keypad system according to claim 2, wherein the identification scanner is a fingerprint scanner (5).

4. The keyless entry keypad system according to claim 3, wherein the fingerprint scanner (5) is adapted to be arranged on a door handle (6) of the vehicle (1).

5. The keyless entry keypad system according to claim 2, wherein the identification scanner is a face recognition device.

6. The keyless entry keypad system according to any of the preceding claims, further comprising a light emitting device (7) projecting the keypad on the window (3) on the keypad area (2).

7. The keyless entry keypad system according to claim 6, wherein the keypad area (2) on the window (3) comprises a layer of light reactive substance.

8. The keyless entry keypad system according to claim 7, wherein the light reactive substance is a chemical composition that exhibits light fluorescing functionality when exposed to light in the ultra-violet light spectrum and the light outputted from the light emitting device (7) comprises light from the ultra-violet light spectrum.

9. The keyless entry keypad system according to claim 8, wherein the light emitting device (7) is one of an ultra-violet light emitting diode and a laser that emits ultra-violet light.

10. The keyless entry keypad system according to any of the claims 6-9, wherein the light emitting device (7) is adapted to adjust the intensity of outputted light dependent upon at least one of ambient light level and a solar intensity level.

11. The keyless entry keypad system according to any of the claims 6-10, wherein the control unit is arranged to scramble the keypad shown on the keypad area (2).

12. The keyless entry keypad system according to any of the preceding claims, further comprising an imaging device for capturing user interaction with the keypad area (2).

13. The keyless entry keypad system according to any of the claims 1 to 11, further comprising a sensor for detecting user interaction with the keypad area (2).

14. The keyless entry keypad system according to claim 13, wherein the sensor is an acoustic sensor.

15. A vehicle (1) comprising a keyless entry keypad system according to any of the preceding claims.
